(19) Europäisches Patentamt
European Patent Office
Office européen des brevets

(11) **EP 3 290 891 B1**

(12) **FASCICULE DE BREVET EUROPEEN**

(45) Date de publication et mention de la délivrance du brevet:
**28.08.2024 Bulletin 2024/35**

(21) Numéro de dépôt: **17187915.8**

(22) Date de dépôt: **25.08.2017**

(51) Classification Internationale des Brevets (IPC):
**G01M 11/02** (2006.01)    **G01J 3/28** (2006.01)

(52) Classification Coopérative des Brevets (CPC):
**G01M 11/0264; G01J 3/0297; G01J 3/28; G01J 3/2823; G01M 11/0207; G01M 11/0292;** G01J 2003/2826

(54) **PROCÉDÉ ET DISPOSITIF DE CARACTÉRISATION DES ABERRATIONS D'UN SYSTÈME OPTIQUE**

VERFAHREN UND VORRICHTUNG ZUR CHARAKTERISIERUNG DER ABBILDUNGSFEHLER EINES OPTISCHEN SYSTEMS

METHOD AND DEVICE FOR CHARACTERIZING OPTICAL ABERRATIONS OF AN OPTICAL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.09.2016 FR 1658275**

(43) Date de publication de la demande:
**07.03.2018 Bulletin 2018/10**

(73) Titulaire: **Centre National d'Etudes Spatiales 75001 Paris (FR)**

(72) Inventeurs:
• **DELVIT, Jean-Marc**
  **31401 TOULOUSE Cedex 9 (FR)**
• **LATRY, Christophe**
  **31400 TOULOUSE (FR)**
• **THIEBAUT, Carole**
  **31320 CASTANET-TOLOSAN (FR)**
• **BLANCHET, Gwendoline**
  **82000 MONTAUBAN (FR)**

(74) Mandataire: **Germain Maureau**
  **12, rue Boileau**
  **69006 Lyon (FR)**

(56) Documents cités:
**FR-A1- 2 994 488     US-A1- 2004 052 426**

• **R. G. PAXMAN ET AL: "Optical misalignment sensing and image reconstruction using phase diversity", JOURNAL OF THE OPTICAL SOCIETY OF AMERICA A, vol. 5, no. 6, 1 June 1988 (1988-06-01), pages 914, XP055175979, ISSN: 1084-7529, DOI: 10.1364/JOSAA.5.000914**
• **SHECHTMAN YOAV ET AL: "Phase Retrieval with Application to Optical Imaging: A contemporary overview", IEEE SIGNAL PROCESSING MAGAZINE, IEEE SERVICE CENTER, PISCATAWAY, NJ, US, vol. 32, no. 3, 1 May 2015 (2015-05-01), pages 87 - 109, XP011577486, ISSN: 1053-5888, [retrieved on 20150402], DOI: 10.1109/MSP.2014.2352673**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 3 290 891 B1

**Description**

La présente invention concerne un procédé de caractérisation d'au moins une aberration d'un système optique d'un dispositif d'acquisition d'images, apte à acquérir au moins deux images selon un champ de prise de vue, la deuxième image présentant une aberration différentielle par rapport à la première. L'invention concerne également un dispositif et un programme d'ordinateur associés.

L'invention se situe dans le domaine de l'optique active, consistant à mesurer et à compenser des défauts optiques, également appelés aberrations, dans des dispositifs d'acquisition d'images.

L'invention s'applique notamment dans le domaine de l'imagerie spatiale. Dans ce domaine, les dispositifs d'acquisition d'images comportent des télescopes munis de miroirs. Afin d'obtenir une bonne résolution de prise d'image il est fondamental de réaliser un télescope comportant le moins possible d'aberrations afin d'atteindre la limite physique imposée par la diffraction. Ceci est difficile à réaliser pour de multiples raisons : les bougés relatifs des miroirs constituant la combinaison optique, la qualité de réalisation des surfaces optiques des miroirs, la stabilité mécanique dans le temps vis-à-vis des contraintes thermoélastiques et de gravité induisent des aberrations optiques. La mesure et la compensation des aberrations optiques permettent ainsi de réduire fortement la complexité de réalisation de tels systèmes optiques.

La caractérisation et la compensation des aberrations optiques, notamment de défauts de focalisation, est en particulier utile dans le domaine de l'acquisition d'images par balayage de fauchée (en anglais « pushbroom »), réalisé par la fixation de barrettes de détecteurs d'images sur un satellite et un défilement du satellite au-dessus de la scène captée dans le champ de prise de vue.

Enfin, dans le domaine de l'acquisition d'image grand public, les appareils photographiques sont munis d'objectifs à lentilles, dont la longueur focale est ajustée par déplacement des lentilles. Dans ce domaine également, il est utile de disposer d'un système automatique de caractérisation des aberrations optiques, notamment d'un défaut de focalisation. Il existe divers systèmes permettant de réaliser un réglage de focalisation, appelés systèmes d'autofocus. Il est également utile de proposer, pour certains dispositifs d'acquisition d'image grand public, une méthode alternative d'estimation automatique d'aberrations comme par exemple de la défocalisation. De tels appareils et systèmes sont par exemple connus de l'article "Paxmann et Fienup, Journal of the Optical Society of America A, 5, 6, pages 914 - 923, 1988", du document US2004052426, et du document FR2994488.

A cet effet, l'invention propose un procédé de caractérisation d'au moins une aberration optique d'un système optique d'un dispositif d'acquisition d'images selon la revendication 1, le système optique ayant une fonction de transfert optique associée dépendant des aberrations, le dispositif d'acquisition étant apte à acquérir au moins deux images dans un champ de prise vue de manière à introduire une aberration différentielle entre les deux images, chaque image étant définie par un signal numérique d'image.

Le système optique à caractériser comprend au moins un ensemble de barrettes de détecteurs disposées en quinconce, et lesdites première et deuxième images appartiennent à des zones de recouvrement entre barrettes de détecteurs adjacentes.

Le système optique peut comprendre une pluralité d'ensembles de barrettes de détecteurs, chaque ensemble de barrettes de détecteurs ayant une bande spectrale d'acquisition associée, le procédé étant appliqué sur l'ensemble des zones de recouvrement des différentes bandes spectrales correspondant à une même zone du champ de prise de vue, afin de déterminer des aberrations relatives à chacune de ces zones du champ de prise de vue.

Le procédé peut présenter une ou plusieurs des caractéristiques ci-dessous:Le procédé est appliqué sur au moins une zone de recouvrement de chaque bande spectrale, de manière à caractériser des aberrations optiques par bande spectrale.

La fonctionnelle dépend en outre d'une longueur d'onde centroïde associée à la bande spectrale d'acquisition, et la longueur d'onde centroïde est estimée lors de la minimisation de ladite fonctionnelle.

La fonctionnelle dépend en outre d'un décalage spatial entre la première image et la deuxième image acquises, ledit décalage spatial étant estimé lors de la minimisation de ladite fonctionnelle.

L'étape de calcul d'au moins un paramètre caractérisant au moins une aberration optique met en oeuvre une modélisation de ladite fonction de transfert optique en fonction d'au moins un coefficient d'une décomposition dans une base de polynômes de Zernike d'une erreur de front d'onde associée au système optique du dispositif d'acquisition.

La minimisation de la fonctionnelle est effectuée par une méthode d'estimation itérative.

Le procédé comprend une modélisation de chacune des fonctions de transfert optique associées aux acquisitions d'image par un polynôme de degré inférieur ou égal à deux, défini par des variables représentatives des aberrations optiques à caractériser et une minimisation de ladite fonctionnelle par une méthode non itérative.

La valeur d'aberration différentielle entre la première et la deuxième image acquise est estimée lors de la minimisation de ladite fonctionnelle.

L'aberration différentielle entre la première image et la deuxième image est une défocalisation relative entre la première image et la deuxième image.

Selon un autre aspect, l'invention concerne un dispositif de caractérisation d'au moins une aberration optique d'un système optique d'un dispositif d'acquisition d'images selon la revendication 12, le système optique ayant une fonction de transfert optique associée dépendant des aberrations, le dispositif d'acquisition étant apte à acquérir au moins deux images dans un champ de prise vue de manière à introduire une aberration différentielle entre les deux images, chaque image étant définie par un signal numérique d'image.

Selon un autre aspect, l'invention concerne un programme d'ordinateur selon la revendication 11 comportant des instructions logicielles qui, lorsqu'elles sont mises en oeuvre par un dispositif programmable, mettent en oeuvre un procédé de caractérisation d'au moins une aberration optique d'un système optique d'un dispositif d'acquisition d'images tel que brièvement décrit ci-dessus.

D'autres caractéristiques et avantages de l'invention ressortiront de la description qui en est donnée ci-dessous, en référence aux figures annexées, parmi lesquelles :

- la figure 1 illustre schématiquement un dispositif d'acquisition d'images et un dispositif de caractérisation des aberrations optiques;
- la figure 2 illustre schématiquement un dispositif d'acquisition d'images par satellite ;
- la figure 3 est une vue en coupe schématisée d'un dispositif d'acquisition d'images à barrettes de détecteurs ;
- la figure 4 est un logigramme des principales étapes d'un procédé de caractérisation d'une aberration optique
- la figure 5 est un logigramme des principales étapes d'un procédé de caractérisation d'une aberration optique
- la figure 6 est un synoptique des principaux modules d'un dispositif programmable.

Le procédé de l'invention s'applique dans le domaine de l'imagerie satellite mais n'est pas limité à ce domaine. Il sera décrit ci-après dans son application à l'imagerie satellite pour l'observation de scène complexe, par exemple dans le contexte de l'observation de la terre par satellite, étant entendu que le procédé est applicable pour l'acquisition de tout autre type d'image.

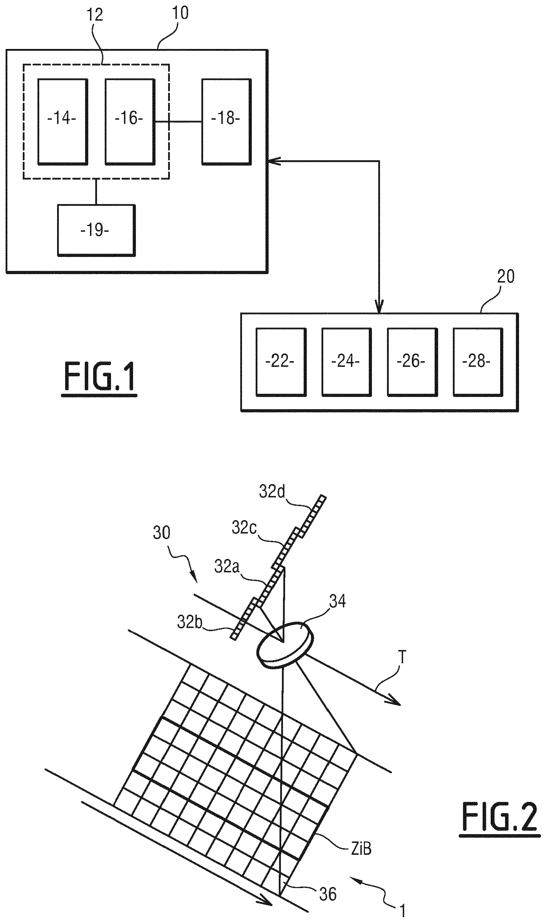

La figure 1 illustre schématiquement un dispositif d'acquisition d'images 10.

Le dispositif d'acquisition d'images 10 comporte un système optique 12, comportant une optique de formation d'image 14, par exemple une ou plusieurs lentilles et un ou plusieurs détecteurs 16 aptes à capter des ondes électromagnétiques formant un signal lumineux représentatif d'une scène, par exemple un paysage, et à le transformer en signal électrique. Le système optique est apte à capter un ou plusieurs signaux lumineux, chacun appartenant à une bande spectrale définie par un intervalle de longueurs d'onde donné.

Par exemple, le système optique 12 comporte une pluralité de matrices monodimensionnelles de détecteurs, également appelées barrettes de détecteurs.

De préférence, le système optique est apte à capter plusieurs signaux appartenant à des bandes spectrales différentes. Il s'agit dans ce cas d'un système optique multi-spectral.

Le système optique 12 est associé à un module de numérisation 18, permettant de transformer le signal électrique en un signal numérique d'image, échantillonné sur une grille d'échantillonnage bidimensionnelle.

De manière connue, un signal numérique d'image est représenté par une matrice de pixels, chaque pixel ayant une position spatiale dans la grille d'échantillonnage et une valeur de radiométrie (ou intensité) associée. Une telle représentation de l'image numérique est appelée représentation dans le domaine spatial.

Le dispositif d'acquisition 10 comporte, de manière pas selon l'invention, un module 19 de décalage de plan focal permettant d'introduire une défocalisation relative entre images acquises successivement par le système optique 12.

En variante, le dispositif d'acquisition 10 comporte un module 19 permettant d'introduire une aberration différentielle autre qu'une défocalisation relative.

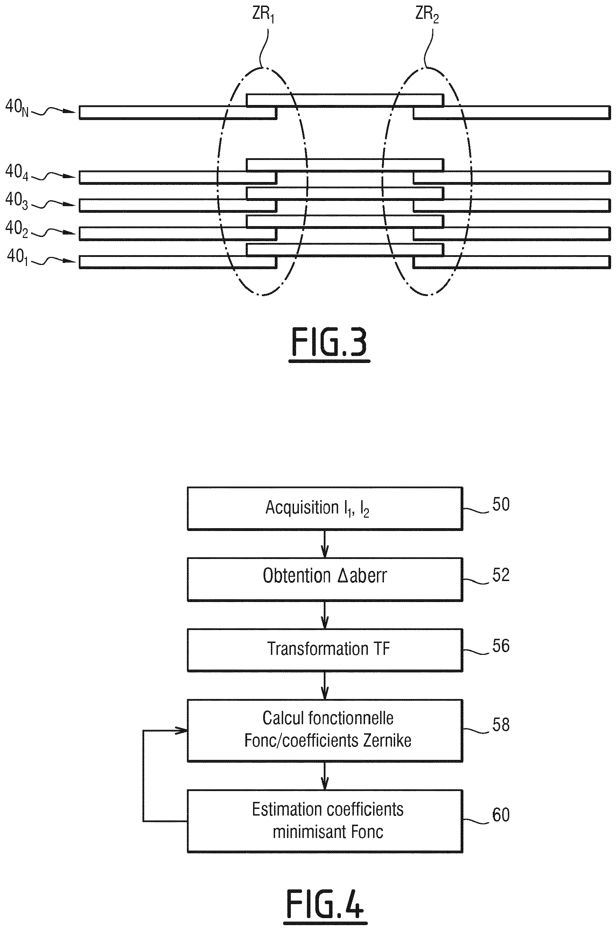

Selon l'invention, le dispositif d'acquisition d'images 10 ne comporte pas de module 19 spécifique, mais le procédé de l'invention exploite le fait que chaque bande spectrale est acquise par plusieurs barrettes physiques disposées en quinconce et formant un ensemble de barrettes, chaque barrette ayant un numéro associé, telles que les images acquises par les barrettes de numéro pair, dites barrettes paires, présentent une aberration supplémentaire par rapport aux images acquises par les barrettes de numéro impair, dites barrettes impaires, comme dans l'exemple illustré ci-après en référence à la figure 3. Dans cette variante, on exploite les zones de recouvrement ZR entre barrettes paires et impaires. Cela permet d'avoir plusieurs mesures en un même endroit du champ de prise de vue par exploitation des zones de recouvrement ZR homologues de chacune des bandes spectrales et ainsi d'améliorer la performance de mesure par moyennage et filtrage en l'absence de chromatisme, ou de mesurer ce chromatisme s'il existe. La mesure dans l'ensemble des zones de recouvrement ZR donne accès aux aberrations optiques dans tout le champ de prise de vue du système optique.

Deux ensembles de zones de recouvrement, notées respectivement $ZR_1$ et $ZR_2$, sont représentés à la figure 3.

Le dispositif d'acquisition d'images 10 est connecté, par tout moyen de connexion approprié, par exemple via un bus de transmission de données, à un dispositif de traitement 20, muni d'un ou plusieurs processeurs, et apte à mettre en oeuvre des programmes comportant des instructions logicielles aptes à mettre en oeuvre le procédé de caractérisation d'aberrations optiques selon l'invention.

Le dispositif de traitement 20 comporte un module 22 de réception d'images numériques du dispositif d'acquisition d'images 10 et un module 24 de traitement des images numériques reçues. Le dispositif de traitement 20 comporte également un module 26 d'estimation des aberrations optiques recherchées par minimisation d'une fonctionnelle dépendant de deux images acquise avec une aberration différentielle.

Enfin, le dispositif de traitement 20 comporte un module 28 d'utilisation du ou des paramètres caractérisant les aberrations optiques calculés par le module de calcul 26 pour une correction calculatoire du signal d'image acquis pour compenser au mieux l'impact des aberrations sur l'image ou pour l'obtention d'une instruction de réglage de la mise au point du dispositif d'acquisition d'image 10, qui est transmise par exemple au module 19 de ce dispositif.

La figure 2 illustre schématiquement un dispositif d'acquisition d'images dans le contexte de l'acquisition d'images numériques par satellite.

Un satellite non représenté, ayant une trajectoire de déplacement T, est muni d'un dispositif d'acquisition d'images comportant un système optique 30.

Le système optique 30 comporte une pluralité de barrettes de détecteurs 32a, 32b, 32c, 32d.

L'acquisition d'un paysage observé se fait via un télescope 34. Chaque détecteur d'une barrette de détecteurs réalise l'acquisition d'une portion de la scène (également appelée paysage) observée, enregistrée dans une matrice d'image numérique I sous forme d'un échantillon d'image 36 ou pixel dans les zones d'acquisition simples, pour lesquelles une seule barrette de détecteurs reçoit un flux lumineux. Chaque pixel d'image a une valeur de radiométrie associée.

Le dispositif d'acquisition d'image 30 présente, dans les zones de recouvrement inter-barrettes, une aberration différentielle, par exemple une défocalisation relative.

Avantageusement, cette aberration différentielle est volontairement introduite et connue.

La figure 3 illustre schématiquement une vue en coupe des barrettes de détecteurs dans un dispositif d'acquisition d'image tel que décrit ci-dessus.

Dans le cas de l'imagerie satellite, un dispositif d'acquisition d'images comporte plusieurs ensembles de barrettes de détecteurs, notés respectivement $40_1$, $40_2$, $40_i$, $40_{N-1}$, $40_N$, correspondant à une acquisition d'images appartenant à N bandes spectrales.

Chaque ensemble de barrettes $40_i$ comporte une ou plusieurs zones de recouvrement inter-barrettes, comme illustré à la figure 3 où on observe les zones $ZR_1$ et $ZR_2$.

En pratique, dans un mode de réalisation, les zones de recouvrement ont une largeur supérieure à un nombre donné de pixels, par exemple 50 pixels.

Par exemple, dans un mode de réalisation, les ensembles de barrettes de détecteurs $40_i$ correspondent chacun à une voie multi-spectrale, associée à une bande spectrale étroite donnée, en mode multi-spectral, et l'ensemble $40_N$ correspond au mode de prise de vue panchromatique, appelé voie panchromatique, correspondant à une bande spectrale large et ayant une résolution spatiale plus élevée que les autres voies multi-spectrales.

De manière classique, un rapport de résolution de 4 existe entre la voie panchromatique et chaque voie multi-spectrale.

Dans un premier mode de réalisation, il existe un différentiel de focalisation natif, également appelé décalage, entre les plans focaux de l'ensemble $40_N$ et de l'un quelconque des ensembles de barrettes $40_i$, et ce décalage est estimé et utilisé dans le procédé de caractérisation d'aberrations optiques comme expliqué en détail ci-après.

De même, dans ce mode de réalisation, un décalage de focalisation entre les plans focaux de deux ensembles de barrettes $40_i$ et $40_j$, dans les zones de recouvrement inter-barrettes, est estimé et utilisé dans le procédé de caractérisation d'aberrations optiques comme expliqué en détail ci-après.

Dans un deuxième mode de réalisation, un décalage de focalisation prédéterminé et maîtrisé est introduit, par construction, entre des ensembles de barrettes choisis, de manière à construire un système optique apte à réaliser un décalage de focalisation prédéterminé. Dans ce mode de réalisation, ce décalage de focalisation prédéterminé est utilisé dans le procédé de caractérisation d'aberration optique. Avantageusement, l'introduction d'une aberration différentielle de défocalisation pouvant aller jusqu'à 200nm entre bandes multi-spectrales a un impact négligeable sur la qualité des images en raison du rapport de résolution des voies multi-spectrales avec la voie panchromatique.

Plus généralement, une valeur d'aberration différentielle autre qu'une défocalisation relative est volontairement introduite entre ensembles de barrettes choisis.

Selon un mode de réalisation, la détermination des aberrations optiques exploite uniquement les zones de recouvrement de chaque bande spectrale, en exploitant l'aberration différentielle existant entre images acquises par les barrettes paires et impaires. Avantageusement, il est possible alors de caractériser des aberrations optiques par bande spectrale, qu'on appelle également aberrations chromatiques.

De plus, la détermination des aberrations optiques est effectuée par zone de recouvrement, ce qui permet de caractériser les aberrations optiques selon leur position spatiale dans le champ de prise de vue.

Avantageusement, l'exploitation des zones de recouvrement de chaque bande spectrale permet de caractériser les aberrations optiques avec une localisation spatiale et spectrale dans le champ de prise de vue du dispositif d'acquisition d'images.

De manière connue, tout système optique est caractérisé par une fonction de transfert optique, qui est la transformation de Fourier de la réponse impulsionnelle optique ou PSF (de l'anglais « Point Spread Function »).

La fonction de transfert optique est une fonction complexe des fréquences spatiales, et l'application d'une transformation de Fourier à un signal d'image numérique défini dans un domaine spatial bidimensionnel résulte en un signal d'image transformé, défini dans le domaine-fréquentiel, chaque point ayant un module et une phase associés.

La fonction de transfert optique caractérise le flou introduit par le système optique, donc l'atténuation des fréquences spatiales. La fonction de transfert optique idéale, appelée également fonction de transfert optique de diffraction caractérise le flou introduit en l'absence de défauts dans la réalisation de la combinaison optique.

Dans la pratique, des aberrations optiques sont introduites par le système optique, et par conséquent la fonction de transfert optique réelle est différente de la fonction de transfert optique de diffraction.

On modélise une image numérique I issue d'un signal d'image S représentatif d'une scène captée, formée par un dispositif d'acquisition d'images comportant un système optique de réponse impulsionnelle optique donnée, comme la convolution du signal d'image S observé avec la réponse impulsionnelle optique, puis l'échantillonnage sur une grille bidimensionnelle et l'adjonction de bruit.

Il est à noter que l'échantillonnage s'accompagne en général d'un repliement de spectre si la condition de Shannon n'est pas satisfaite.

La réponse impulsionnelle h d'un dispositif d'acquisition d'images peut s'écrire comme un produit de convolution de deux termes :

$$h = h_{opt} * h_{\det} \qquad (EQ1)$$

Où l'opérateur * désigne le produit de convolution, $h_{opt}$ est la réponse impulsionnelle optique, et $h_{dét}$ est la réponse impulsionnelle du détecteur, associée à l'intégration de photons par un détecteur élémentaire et à l'éventuel déplacement du détecteur faisant partie du dispositif d'acquisition d'images pendant le temps d'intégration.

L'image numérique I s'écrit donc, en utilisant un modèle convolutif d'acquisition d'images :

$$I = S * h_{\det} * h_{opt} + b \qquad (EQ2)$$

où b est un terme de bruit.

La réponse impulsionnelle optique et la FTM optique qui est sa transformée de Fourier, sont entièrement déterminées par la connaissance de l'erreur front d'onde (WFE) et du masque (P) d'occultation de la pupille de l'objectif du système d'acquisition d'images, par exemple du télescope dans le cas de l'acquisition d'images par satellite.

On cherche à résoudre le problème de la diversité de phase consistant à estimer l'erreur de front d'onde en utilisant au moins deux images acquises sur un même paysage avec une aberration optique différentielle.

La résolution du problème de diversité de phase repose sur une modélisation, selon le modèle convolutif d'acquisition d'images, du couple d'images observées, notées $I_1$ et $I_2$, en fonction des aberrations recherchées, elles-mêmes représentées sous la forme d'une combinaison de polynômes de Zernike, les inconnues étant les poids $a_i$ de cette combinaison définis ci-après.

Les relations suivantes sont appliquées :

$$\left\{ TF(S) \times FTM_{\det} \times FTM_{opt}(WFE) \right\}_{rep} + TF(b_1) = TF(I_1) \qquad (EQ3)$$

$$\left\{ TF(S) \times FTM_{\det} \times FTM_{opt+\Delta aberr}(WFE) \times RP_{2/1} \right\}_{rep} + TF(b_2) = TF(I_2) \qquad (EQ4)$$

Où $TF()$ est la transformation de Fourier, $FTM_{opt}$ désigne la fonction de transfert optique (transformation de Fourier de $h_{opt}$) et $FTM_{dét}$ est la transformation de Fourier de $h_{dét}$. $RP_{2/1}$ est une fonction fréquentielle de type rampe de phase linéaire représentant dans le domaine de Fourier le décalage spatial relatif éventuellement non nul entre les deux images.

La valeur $\Delta aberr$ est associée à l'aberration différentielle supplémentaire, introduite ou estimée, entre les deux images $I_1$ et $I_2$. Les termes $b_1$ et $b_2$ désignent le bruit correspondant aux images respectives $I_1$, $I_2$.

L'expression $\{\}_{rep}$ indique la présence éventuelle de repliement dans le domaine fréquentiel, appelé également repliement spectral. Le phénomène de repliement spectral est connu.

L'erreur de front d'onde WFE s'exprime dans la base orthonormée des polynômes de Zernike par :

$$WFE = WFE_{a\_priori} + \sum_{i \in \Im} a_i Z_i \qquad\qquad (EQ5)$$

Où $\Im$ représente l'ensemble d'indices de la base de polynômes de Zernike correspondant aux aberrations optiques recherchées, $Z_i$ est le polynôme de Zernike d'indice i, et $a_i$ des coefficients de décomposition (ou poids) correspondants. A chaque polynôme de Zernike est associé un type d'aberration optique, par exemple $Z_4$ représente l'erreur de focalisation, communément appelée défocus, $Z_5$ et $Z_6$ deux types d'astigmatisme etc.

Le nombre d'indices dans $\Im$ est quelconque, par exemple compris entre 1 et 40.

Chaque valeur de coefficient $a_i$ de la décomposition (EQ5) est représentative de l'aberration correspondante dans l'image considérée. Par exemple, la valeur du coefficient $a_4$ est représentative de l'erreur de focalisation, elle représente l'erreur quadratique moyenne due à la défocalisation.

Pour calculer les fonctions de transfert optiques (FTM$_{opt}$) associées aux erreurs de front d'ondes (WFE et WFE + $\Delta$aberr), des deux images I$_1$ et I$_2$ on se base sur la relation (EQ6) suivante :

$$FTM_{opt} = TF\left(\left|TF^{-1}\left(Pe^{\frac{j2\pi}{\lambda}WFE}\right)\right|^2\right) \qquad\qquad (EQ6)$$

P étant le masque d'occultation et $\lambda$ la longueur d'onde centroïde de la bande spectrale considérée (moyenne pondérée par le gabarit spectral de la bande spectrale et la réponse spectrale du paysage).

Il est à noter que pour une scène complexe, par exemple un paysage observé par imagerie satellitaire, le signal d'image S est inconnu. Il en est de même du module de la fonction de transfert $FTM_{dét}$ du détecteur.

Dans ses divers modes de réalisation, l'invention propose d'utiliser une acquisition d'un couple d'images numériques I$_1$, I$_2$ représentatives d'une même portion de scène S, et présentant une aberration différentielle de valeur $\Delta$aberr, par exemple une différence de focalisation $\Delta$aberr, qui est déterminée par construction ou par estimation.

Pour la première image numérique I$_1$, la relation (EQ3), en considérant le bruit négligeable, s'écrit :

$$\left\{TF(S) \cdot FTM_{det} \cdot FTM_{opt}\right\}_{rep} = TF(I_1) \qquad\qquad (EQ7)$$

Le terme WFE a été omis pour simplifier l'écriture des équations.

Considérant que la valeur d'aberration différentielle $\Delta$aberr s'applique sur la deuxième image I$_2$ par rapport à la première image I$_1$, la relation (EQ4) s'écrit :

$$\left\{TF(S) \cdot FTM_{det} \cdot FTM_{opt+\Delta aberr}\right\}_{rep} = TF(I_2) \qquad\qquad (EQ8)$$

Il est à noter néanmoins que pour une deuxième image I$_2$ présentant une aberration différentielle de valeur $\Delta$aberr importante, par exemple 200nm de défocalisation, une quantité importante de flou est introduite dans cette deuxième image, et par conséquent cette deuxième image comprend peu de hautes fréquences spatiales et le repliement de spectre très faible.

L'invention propose de minimiser une fonctionnelle *Fonc,* obtenue à partir des relations (EQ7) et (EQ8), qui ne nécessite pas la connaissance du signal S, ni de la fonction de transfert spécifique aux détecteurs $FTM_{dét}$.

La fonctionnelle est obtenue en éliminant entre les deux équations (EQ7) et (EQ8) le terme commun $TF(S) \cdot FTM_{det}$.

Dans un mode de réalisation, la fonctionnelle *Fonc* à minimiser est donnée par :

$$Fonc = \frac{1}{2\sigma^2} \iint \frac{TF(I_2) \cdot FTM_{opt} - TF(I_1) \cdot FTM_{opt+\Delta aberr}}{\left|FTM_{opt}\right|^2 + \left|FTM_{opt+\Delta aberr}\right|^2 + \varepsilon} df_x \, df_y \qquad\qquad (EQ9)$$

Où $\sigma^2$ est la variance du bruit radiométrique b moyen de chacune des deux images, $f_x$ et $f_y$ représentent les fréquences spatiales, $\varepsilon$ un terme de correction évitant les instabilités numériques pour les fréquences rendant le dénominateur proche de 0. Par exemple, $\varepsilon$ peut prendre la valeur $10^{-12}$.

La variance $\sigma^2$ est par exemple estimée en appliquant un modèle de bruit du type : $\sigma^2 = \sqrt{A^2 + B \cdot Moy}$ , où Moy est la moyenne de l'image $I_1$, et A et B sont des valeurs réelles dépendant des caractéristiques instrumentales du dispositif d'acquisition d'images.

L'utilisation du paramètre $\sigma^2$ est optionnelle puisque le critère d'arrêt de la minimisation de la fonctionnelle porte sur la valeur relative de la fonctionnelle entre deux itérations. Néanmoins, la disponibilité d'un tel modèle permet avantageusement d'éliminer les images trop bruitées et fournit un indice de confiance sur l'estimation, une bonne estimation correspondant à une valeur de fonctionnelle finale proche de 1.

Avantageusement, l'expression (EQ9) de la fonctionnelle *Fonc* à minimiser ne comprend pas les termes *TF(S)* et *FTM*$_{det}$ qui ne sont pas connus.

Plusieurs modes de réalisation sont envisagés pour le calcul des aberrations optiques à partir de la minimisation de la fonctionnelle *Fonc.*

La figure 4 est un logigramme des principales étapes d'un procédé de caractérisation d'aberrations optiques.

Lors d'une première étape 50, des images, respectivement une première image $I_1$ et une deuxième image $I_2$, présentant une aberration différentielle et correspondant à une même scène, sont obtenues à partir d'un dispositif d'acquisition d'image.

Comme déjà expliqué ci-dessus, dans un mode de réalisation cette aberration différentielle est présente dans le dispositif d'acquisition d'images dans les zones de recouvrement inter-barrettes dans le cas d'un dispositif d'acquisition d'images tel que décrit à la figure 3.

Dans un autre mode de réalisation une aberration différentielle est introduite volontairement, et la valeur $\Delta aberr$ correspondante est par conséquent connue.

Dans cet autre mode, une valeur $\Delta aberr$ d'aberration différentielle plus importante peut être introduite, mais la deuxième image $I_2$ obtenue n'est dans ce cas pas exploitable par une application utilisatrice, sauf dans le cas multispectral mentionné ci-dessus. Par exemple, lorsque l'aberration différentielle est une défocalisation, la deuxième image $I_2$ présente une quantité de flou importante.

La valeur d'aberration différentielle $\Delta aberr$ est obtenue à l'étape 52.

Dans le mode de réalisation dans lequel l'aberration différentielle est native dans le dispositif d'acquisition d'images, à l'étape 52 on obtient une valeur $\Delta aberr$ initiale d'aberration différentielle, une valeur affinée étant obtenue à l'étape d'estimation ultérieure décrite ci-dessous.

Une transformation de Fourier est ensuite appliquée lors d'une étape de transformation 56 aux signaux d'image, pour obtenir un premier signal d'image transformé $TF(I_1)$ et un deuxième signal d'image transformé $TF(I_2)$ .

L'étape de transformation 56 est suivie d'une étape de modélisation 58 du module de la fonction de transfert optique.

Comme expliqué ci-dessus, on cherche ensuite à minimiser une fonctionnelle Fonc, qui dépend de $TF(I_1)$, de $TF(I_2)$ et des fonctions de transfert optique associées aux deux acquisitions et respectivement notées $FTM_{opt}$ et $FTM_{opt+\Delta aberr}$.

Une fonction de transfert optique s'écrit, de manière connue, comme l'autocorrélation de la fonction pupillaire complexe Pc, relative à la pupille de l'objectif du système optique d'acquisition d'images.

$$FTM_{opt} = autocorr(P_c(x, y)) \qquad (EQ10)$$

En un point (x,y), la fonction pupillaire complexe s'écrit en fonction du module P(x,y) et de la phase $\varphi(x, y)$ :

$$P_c(x, y) = P(x, y)e^{j\varphi(x,y)} \qquad (EQ11)$$

Le terme P(x,y) est le masque binaire qui vaut 1 sur la pupille et 0 ailleurs.

Le terme de phase $\varphi(x, y)$, appelé également phase aberrante, représente la différence au point (x,y) entre la phase de l'onde lumineuse réelle sur le plan pupillaire et la phase d'une onde sphérique idéale.

On caractérise l'erreur de front d'onde WFE(x,y) par la formule :

$$\varphi(x, y) = \frac{2\pi}{\lambda} WFE(x, y) \qquad\qquad (EQ12)$$

Où $\lambda$ est la longueur d'onde centroïde de la bande spectrale considérée. L'erreur de front d'onde s'exprime dans la base orthonormée des polynômes de Zernike selon la formule (EQ5) rappelle ci-dessous

$$WFE(x, y) = WFE_{a\_priori}(x, y) + \sum_{i \in \mathfrak{S}} a_i Z_i(x, y) \ (EQ5)$$

Chaque valeur de coefficient $a_i$ de la décomposition est représentative de l'aberration correspondante.

Ainsi, pour des valeurs des coefficients $a_i$ données, on obtient l'erreur de front d'onde selon la formule (EQ5), et en combinant les formules (EQ10), (EQ11) et (EQ12) on en déduit la fonction de transfert optique FTM$_{opt}$.

Dans un mode de réalisation, l'étape 60 met en oeuvre une estimation itérative, en faisant évoluer les valeurs respectives des coefficients $a_i$ jusqu'à minimiser la fonctionnelle *Fonc.* Par exemple, on utilise l'algorithme de Levenberg-Marquardt, ou tout autre algorithme de minimisation itérative.

Le critère d'arrêt des itérations porte sur la valeur relative de la fonctionnelle entre deux itérations : la convergence est réputée atteinte lorsque cette valeur relative est inférieure à un seuil prédéterminé.

Dans un mode de réalisation, lors de l'étape d'estimation itérative, on estime également la longueur d'onde centroïde $\lambda$ et le décalage spatial entre les deux images $I_1$ et $I_2$, représenté par le terme RP$_{2/1}$ dans l'équation (EQ4), qui sont également des inconnues, en partant de valeurs initiales prédéterminées.

En outre, lorsque l'aberration différentielle est native dans le dispositif d'acquisition d'images, la valeur $\Delta aberr$ de l'aberration différentielle est également estimée lors de l'étape d'estimation itérative à l'étape 60.

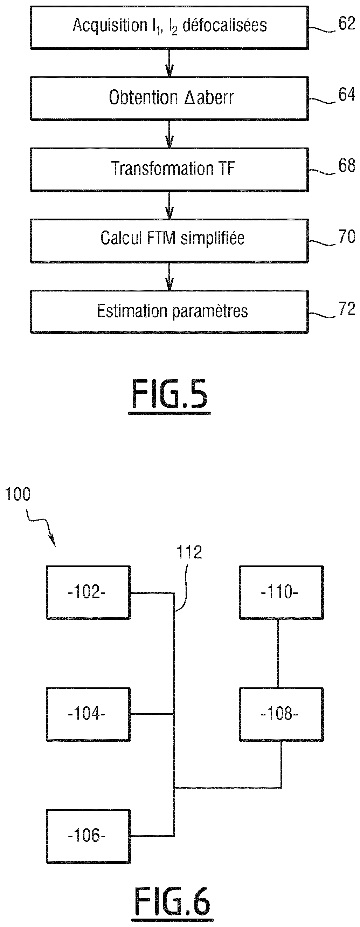

La figure 5 est un logigramme des principales étapes d'un procédé de caractérisation d'aberrations optiques selon un deuxième mode de réalisation de l'invention.

Les étapes 62 à 68 sont analogues aux étapes 50 à 56 du premier mode de réalisation et ne sont pas décrites plus en détail ici.

L'étape d'application d'une transformation de Fourier 68 est suivie d'une étape de calcul des modules des fonctions de transfert optique respectifs notés *FTM$_{opt}$* et *FTM$_{opt+\Delta aberr}$* basé sur une simplification des formules applicable lorsque la phase aberrante $\varphi(x,y)$ associée à la représentation de la fonction pupillaire complexe est de faible amplitude.

Dans ce cas, un développement limité, par exemple au second ordre, est appliqué :

$$e^{j\varphi} \approx 1 + j\varphi - \frac{\varphi^2}{2} \qquad\qquad (EQ13)$$

La fonction de transfert optique peut alors s'écrire sous la forme d'un développement limité:

$$FTM_{opt} \approx FTM_{opt}\left(WFE_{a\,priori}\right) + \sum_{i \in L} \alpha_i a_i + \sum_{k,l \in L} \beta_{kl} a_k a_l \qquad (EQ14)$$

Où *FTM$_{opt}$(WFE$_{a\,priori}$)* est la fonction de transfert optique correspondant à la connaissance a priori de la WFE du système optique, les termes $\{a_i\}$ sont les coefficients de la décomposition de l'erreur de front d'onde sur la base des polynômes de Zernike, L est le sous-ensemble des indices des polynômes de Zernike permettant de représenter la phase aberrante et les termes $\{\alpha_i\}$, $\{\beta_{kl}\}$ sont des fonctions fréquentielles.

Ainsi, on modélise les fonctions de transfert optique associées aux deux acquisitions par deux polynômes de degré inférieur ou égal à 2 dont les variables $a_i$, $a_l$ sont représentatives des aberrations recherchées.

Dans un cas particulier, lorsque la seule aberration optique recherchée est un défaut de défocalisation, seul le coefficient $a_4$ correspondant au polynôme de Zernike $Z_4$ est non nul, et la formule (EQ14) se réduit à :

$$FTM_{opt} \approx FTM_{opt}\left(WFE_{a\,priori}\right) + \alpha_4 a_4 \qquad\qquad (EQ15)$$

L'expression (EQ14) ou l'expression (EQ15) est utilisée dans l'expression de la fonctionnelle à minimiser.

L'étape 70 est suivie d'une étape 72 d'estimation des valeurs de $a_4$ et de $\beta_4$ permettant de minimiser la fonctionnelle *Fonc,* et par conséquent on obtient $a_4$, valeur caractérisant l'aberration de défocalisation.

La valeur de $a_4$ obtenue est ensuite exploitée dans une étape ultérieure d'utilisation, par exemple pour corriger le réglage de la focalisation de prise de vue, ou pour déconvoluer finement l'image $I_2$ par traitement algorithmique.

Avantageusement, l'utilisation de l'expression (EQ14) simplifie le calcul de la fonctionnelle et permet une minimisation non itérative, donc un allègement de la charge calculatoire.

Les divers modes de réalisation du procédé de caractérisation d'aberrations optiques de l'invention sont mis en oeuvre par un dispositif programmable de type ordinateur, station de travail, dont les principaux blocs fonctionnels sont illustrés à la figure 6.

Un dispositif programmable 100 apte à mettre en oeuvre les procédés de l'invention comprend une unité centrale de traitement 108, ou CPU, apte à exécuter des instructions de programme informatique lorsque le dispositif 100 est mis sous tension. Dans un mode de réalisation, une unité centrale de traitement multi-processeurs est utilisée, permettant d'effectuer des calculs parallèles. Le dispositif 100 comporte également des moyens de stockage d'informations 110, par exemple des registres, aptes à stocker des instructions de code exécutable permettant la mise en oeuvre de programmes comportant des instructions de code aptes à mettre en oeuvre le procédé de caractérisation d'aberrations optiques d'un système optique selon l'invention.

Le dispositif 100 comporte des moyens de commande 104 permettant de mettre à jour des paramètres et de recevoir des commandes d'un opérateur. Lorsque le dispositif programmable 100 est un dispositif embarqué, les moyens de commande 104 comprennent un dispositif de télécommunication permettant de recevoir des commandes et des valeurs de paramètres à distance.

Alternativement et de manière optionnelle, les moyens de commande 104 sont des moyens de saisie de commandes d'un opérateur, par exemple un clavier.

De manière optionnelle, le dispositif programmable 100 comprend un écran 102 et un moyen supplémentaire de pointage 106, tel une souris.

Les divers blocs fonctionnels du dispositif 100 décrits ci-dessus sont connectés via un bus de communication 112.

Dans un mode de réalisation, le dispositif 100 est un ASIC, un FPGA ou un processeur.

Un système de caractérisation des aberrations d'un système optique d'un dispositif d'acquisition d'images comporte un dispositif d'acquisition d'images, telle dispositif d'acquisition d'images 10 de la figure 1 et un dispositif apte à mettre en oeuvre le procédé de caractérisation des aberrations d'un système optique tel que décrit ci-dessus.

Le procédé de l'invention décrit ci-dessus permet d'obtenir la caractérisation des aberrations optiques avec une valeur d'aberration différentielle, par exemple un décalage de focalisation natif ou introduit volontairement.

**Revendications**

1. Procédé de caractérisation d'au moins une aberration optique d'un système optique d'un dispositif d'acquisition d'images, le système optique ayant une fonction de transfert optique associée dépendant des aberrations, le dispositif d'acquisition étant apte à acquérir au moins deux images dans un champ de prise vue de manière à introduire une aberration différentielle entre les deux images, chaque image étant définie par un signal numérique d'image, le procédé comportant des étapes de :

    - obtention (50, 62) d'une première image et d'une deuxième image d'une même zone du champ de prise de vue, la deuxième image étant acquise avec une aberration différentielle par rapport à la première image, chaque acquisition d'image ayant une fonction de transfert optique associée,
    - utilisation d'un modèle convolutif de formation d'images pour les images acquises utilisant une fonction de transfert optique dépendant d'au moins une aberration optique ($\Delta$aberr),
    - calcul (58, 60, 70, 72) d'au moins un paramètre caractérisant au moins une aberration optique par minimisation d'une fonctionnelle, définie en utilisant le modèle convolutif de formation d'images, exprimée en fonction des première et deuxième images acquises, d'une modélisation des fonctions de transfert optiques associées aux deux acquisitions dépendant de la ou des aberrations optique à caractériser ainsi que de l'aberration différentielle ($\Delta$aberr),

le procédé étant **caractérisé en ce que** le système optique à caractériser comprend au moins un ensemble de barrettes de détecteurs ($40_1$, $40_2$,..., $40_N$) disposées en quinconce, et dans lequel lesdites première et deuxième images appartiennent à des zones de recouvrement entre barrettes de détecteurs adjacentes, et dans lequel ladite deuxième image est acquise par une deuxième barrette de l'au moins un ensemble de barrettes avec une aberration différentielle par rapport à ladite première image acquise par une première barrette de l'au moins un ensemble de barrettes.

**2.** Procédé selon la revendication 1, dans lequel le système optique comprend une pluralité d'ensembles de barrettes de détecteurs $(40_1, 40_2,..., 40_N)$, chaque ensemble de barrettes de détecteurs ayant une bande spectrale d'acquisition associée, le procédé étant appliqué sur l'ensemble des zones de recouvrement des différentes bandes spectrales correspondant à une même zone du champ de vue, afin de déterminer des aberrations relatives à chacune de ces zones du champ de vue.

**3.** Procédé selon la revendication 1, appliqué sur au moins une zone de recouvrement de chaque bande spectrale, de manière à caractériser des aberrations optiques par bande spectrale.

**4.** Procédé selon l'une quelconque des revendications 1 à 3, dans lequel ladite fonctionnelle dépend en outre d'une longueur d'onde centroïde associée à la bande spectrale d'acquisition, et dans lequel ladite longueur d'onde centroïde est estimée lors de la minimisation de ladite fonctionnelle.

**5.** Procédé selon l'une quelconque des revendications 1 à 4, dans lequel ladite fonctionnelle dépend en outre d'un décalage spatial entre la première image et la deuxième images acquises, ledit décalage spatial étant estimé lors de la minimisation de ladite fonctionnelle.

**6.** Procédé selon l'une des revendications 1 à 5, dans lequel l'étape de calcul d'au moins un paramètre caractérisant au moins une aberration optique met en oeuvre une modélisation de ladite fonction de transfert optique en fonction d'au moins un coefficient d'une décomposition dans une base de polynômes de Zernike d'une erreur de front d'onde associée au système optique du dispositif d'acquisition.

**7.** Procédé selon l'une quelconque des revendications 1 à 6, dans lequel la minimisation de la fonctionnelle est effectuée par une méthode d'estimation itérative.

**8.** Procédé selon l'une quelconque des revendications 1 à 7, comprenant une modélisation de chacune des fonctions de transfert optique associées aux acquisitions d'image par un polynôme de degré inférieur ou égal à deux, défini par des variables représentatives des aberrations optiques à caractériser et une minimisation de ladite fonctionnelle par une méthode non itérative.

**9.** Procédé selon l'une quelconque des revendications 1 à 8, dans lequel une valeur de l'aberration différentielle entre la première et la deuxième image acquise est estimée lors de la minimisation de ladite fonctionnelle.

**10.** Procédé selon l'une quelconque des revendications 1 à 9, dans lequel ladite aberration différentielle entre la première image et la deuxième image est une défocalisation relative entre la première image et la deuxième image.

**11.** Programme d'ordinateur comportant des instructions logicielles qui, lorsqu'elles sont mises en oeuvre par un dispositif programmable, mettent en oeuvre un procédé de caractérisation d'aberrations optiques d'un dispositif d'acquisition d'images selon les revendications 1 à 10 en utilisant un dispositif de caractérisation selon la revendication 12.

**12.** Dispositif de caractérisation d'au moins une aberration optique d'un système optique d'un dispositif d'acquisition d'images, le système optique ayant une fonction de transfert optique associée dépendant des aberrations, le dispositif d'acquisition étant apte à acquérir au moins deux images dans un champ de prise vue de manière à introduire une aberration différentielle entre les deux images, chaque image étant définie par un signal numérique d'image, le dispositif comprenant :

    - un module d'obtention d'une première image et d'une deuxième image d'une même zone du champ de prise de vue, acquises par le dispositif d'acquisition d'images, la deuxième image étant acquise avec une aberration différentielle par rapport à la première image, chaque acquisition d'image ayant une fonction de transfert optique associée,
    - un processeur adapté à mettre en oeuvre un calcul d'au moins un paramètre caractérisant au moins une aberration optique par minimisation d'une fonctionnelle exprimée en fonction des première et deuxième images acquises, utilisant un modèle convolutif de formation d'images pour les images acquises utilisant une fonction de transfert optique dépendant d'au moins une aberration optique,
    ladite fonctionnelle étant également exprimée en fonction d'une modélisation des fonctions de transfert optiques associées aux deux acquisitions dépendant de la ou des aberrations optique à caractériser ainsi que de l'aberration différentielle,
    le système optique à caractériser étant **caractérisé en ce qu'**il comprends au moins un ensemble de barrettes

de détecteurs ($40_1$, $40_2$,..., $40_N$) disposées en quinconce, et dans lequel lesdites première et deuxième images appartiennent à des zones de recouvrement entre barrettes de détecteurs adjacentes, et dans lequel ladite deuxième image est acquise par une deuxième barrette de l'au moins un ensemble de barrettes avec une aberration différentielle par rapport à ladite première image acquise par une première barrette de l'au moins un ensemble de barrettes.

**Patentansprüche**

1. Verfahren zur Charakterisierung mindestens eines optischen Abbildungsfehlers eines optischen Systems einer Bilderfassungsvorrichtung, wobei das optische System eine zugehörige, von den Abbildungsfehlern abhängige optische Übertragungsfunktion aufweist, wobei die Erfassungsvorrichtung imstande ist, mindestens zwei Bilder in einem Aufnahmebereich zu erfassen, um einen differentiellen Abbildungsfehler zwischen den beiden Bildern einzubringen, wobei jedes Bild durch ein digitales Bildsignal definiert wird, wobei das Verfahren die Schritte beinhaltet zum:

   - Erhalten (50, 62) eines ersten Bildes und eines zweiten Bildes aus einer gleichen Zone des Aufnahmebereichs, wobei das zweite Bild mit einem differentiellen Abbildungsfehler in Bezug auf das erste Bild erfasst wird, wobei jede Bilderfassung eine zugehörige optische Übertragungsfunktion aufweist,
   - Verwenden eines Faltungsmodells zur Bildung von Bildern für die erfassten Bilder, welches eine optische Übertragungsfunktion verwendet, die von dem mindestens einen optischen Abbildungsfehler ($\Delta$aberr) anhängig ist,
   - Berechnen (58, 60, 70, 72) mindestens eines Parameters, der mindestens einen optischen Abbildungsfehler charakterisiert, durch Minimieren eines Funktionals, das durch Verwenden des Faltungsmodells zur Bildung von Bildern definiert wird, das in Abhängigkeit von dem ersten und zweiten erfassten Bild ausgedrückt wird, einer Modellierung der zu den beiden Erfassungen zugehörigen optischen Übertragungsfunktionen, die von dem oder den zu charakterisierenden optischen Abbildungsfehler(n) anhängig sind, sowie des differentiellen Abbildungsfehlers ($\Delta$aberr),
   wobei das Verfahren **dadurch gekennzeichnet ist, dass**
   das zu charakterisierende optische System mindestens eine Einheit an Detektorleisten ($40_1$, $40_2$, ..., $40_N$) umfasst, die gegeneinander versetzt angeordnet sind, und wobei das erste und zweite Bild Abdeckungszonen zwischen angrenzenden Detektorleisten angehören, und wobei das zweite Bild durch eine zweite Leiste der mindestens einen Einheit an Leisten mit einem differentiellen Abbildungsfehler in Bezug auf das erste Bild erfasst wird, das von einer ersten Leiste der mindestens einen Einheit an Leisten erfasst wird.

2. Verfahren nach Anspruch 1, wobei das optische System eine Vielzahl von Einheiten an Detektorleisten ($40_1$, $40_2$, ..., $40_N$) umfasst, wobei jede Einheit an Detektorleisten ein zugehöriges Erfassungsspektralband aufweist, wobei das Verfahren auf die Gesamtheit der Abdeckungszonen der verschiedenen Spektralbänder angewandt wird, die einer gleichen Zone des Aufnahmebereichs entsprechen, um relative Abbildungsfehler für jede dieser Zonen des Aufnahmebereichs zu bestimmen.

3. Verfahren nach Anspruch 1, das auf mindestens eine Abdeckungszone eines jeden Spektralbandes angewandt wird, um optische Abbildungsfehler je Spektralband zu charakterisieren.

4. Verfahren nach einem der Ansprüche 1 bis 3, wobei das Funktional weiter von einer zum Erfassungsspektralband zugehörigen Schwerpunktwellenlänge abhängt, und wobei die Schwerpunktwellenlänge beim Minimieren des Funktionals geschätzt wird.

5. Verfahren nach einem der Ansprüche 1 bis 4, wobei das Funktional weiter von einem räumlichen Versatz zwischen dem erfassten ersten Bild und dem erfassten zweiten Bild abhängt, wobei der räumliche Versatz beim Minimieren des Funktionals geschätzt wird.

6. Verfahren nach einem der Ansprüche 1 bis 5, wobei der Schritt des Berechnens mindestens eines Parameters, der mindestens einen optischen Abbildungsfehler charakterisiert, eine Modellierung der optischen Übertragungsfunktion in Abhängigkeit von mindestens einem Koeffizienten einer Aufgliederung in einer Basis von Zernike-Polynomen eines Wellenfrontfehlers umsetzt, der zum optischen System der Erfassungsvorrichtung zugehörig ist.

7. Verfahren nach einem der Ansprüche 1 bis 6, wobei die Minimierung des Funktionals durch eine iterative Schätzungsmethode ausgeführt wird.

8. Verfahren nach einem der Ansprüche 1 bis 7, das eine Modellierung einer jeden der zu den Bilderfassungen zugehörigen optischen Übertragungsfunktionen durch ein Polynom vom Grad kleiner oder gleich zwei, das durch Variable definiert wird, die repräsentativ für die zu charakterisierenden optischen Abbildungsfehler sind, und eine Minimierung des Funktionals durch eine nicht iterative Methode umfasst.

9. Verfahren nach einem der Ansprüche 1 bis 8, wobei ein Wert des differentiellen Abbildungsfehlers zwischen dem ersten und zweiten erfassten Bild bei der Minimierung des Funktionals geschätzt wird.

10. Verfahren nach einem der Ansprüche 1 bis 9, wobei der differentielle Abbildungsfehler zwischen dem ersten Bild und dem zweiten Bild eine relative Defokussierung zwischen dem ersten Bild und dem zweiten Bild ist.

11. Computerprogramm, das Software-Anweisungen beinhaltet, die, wenn sie von einer programmierbaren Vorrichtung umgesetzt werden, ein Verfahren zur Charakterisierung von optischen Abbildungsfehlern einer Bilderfassungsvorrichtung nach den Ansprüchen 1 bis 10 unter Verwendung einer Vorrichtung zur Charakterisierung nach Anspruch 12 umsetzen.

12. Vorrichtung zur Charakterisierung mindestens eines optischen Abbildungsfehlers eines optischen Systems einer Bilderfassungsvorrichtung, wobei das optische System eine zugehörige, von den Abbildungsfehlern abhängige optische Übertragungsfunktion aufweist, wobei die Erfassungsvorrichtung imstande ist, mindestens zwei Bilder in einem Aufnahmebereich zu erfassen, um einen differentiellen Abbildungsfehler zwischen den beiden Bildern einzubringen, wobei jedes Bild durch ein digitales Bildsignal definiert wird, wobei die Vorrichtung umfasst:

- ein Modul zum Erhalten eines ersten Bildes und eines zweiten Bildes aus einer gleichen Zone des Aufnahmebereichs, wobei das zweite Bild mit einem differentiellen Abbildungsfehler in Bezug auf das erste Bild erfasst wird, wobei jede Bilderfassung eine zugehörige optische Übertragungsfunktion aufweist,
- einen Prozessor, der angepasst ist, um eine Berechnung mindestens eines Parameters, der mindestens einen optischen Abbildungsfehler charakterisiert, durch Minimieren eines Funktionals, das in Abhängigkeit von dem ersten und zweiten erfassten Bild ausgedrückt wird, umzusetzen, indem er ein Faltungsmodell zur Bildung von Bildern für die erfassten Bilder verwendet, welches eine optische Übertragungsfunktion verwendet, die von mindestens einem optischen Abbildungsfehler anhängig ist,
wobei das Funktional auch in Abhängigkeit von einer Modellierung der zu den beiden Erfassungen zugehörigen optischen Übertragungsfunktionen, die von dem (den) zu charakterisierenden optischen Abbildungsfehler(n) anhängig sind, sowie des differentiellen Abbildungsfehlers ausgedrückt wird,
wobei das zu charakterisierende optische System **dadurch gekennzeichnet ist, dass** es mindestens eine Einheit an Detektorleisten ($40_1$, $40_2$, ..., $40_N$) umfasst, die gegeneinander versetzt angeordnet sind, und wobei das erste und zweite Bild Abdeckungszonen zwischen angrenzenden Detektorleisten angehören, und wobei das zweite Bild durch eine zweite Leiste der mindestens einen Einheit an Leisten mit einem differentiellen Abbildungsfehler in Bezug auf das erste Bild erfasst wird, das von einer ersten Leiste der mindestens einen Einheit an Leisten erfasst wird.

**Claims**

1. An aberration characterization method for characterizing at least one optical aberration of an optical system of an image acquisition device, the optical system having an associated optical transfer function that is dependent on the aberrations, the image acquisition device being capable of acquiring at least two images in a field of image capture in a manner so as to introduce a differential aberration between the two images, each image being defined by a digital image signal, the method comprising the following steps:

- obtaining (50,62) of a first image and a second image of a same given zone of the field of image capture, the second image being acquired with a differential aberration relative to the first image, each image acquisition having an associated optical transfer function;
- using of a convolutional image formation model for the images acquired using an optical transfer function that is dependent on at least one optical aberration ($\Delta$aberr);
- calculation (58, 60, 70, 72) of at least one parameter characterizing at least one optical aberration by minimisation of a functional, defined using the convolutional model of image formation, expressed as a function of the first and second images acquired, from a modelling of the optical transfer functions associated with the two image acquisitions dependent on the one or more optical aberrations to be characterized as well as on the differential aberration ($\Delta$aberr),

the method being **characterized in that** the optical system to be characterised comprises at least one set of detector arrays ($40_1$, $40_2$,…, $40_N$) arranged in a staggered configuration, and in which said first and second images belong to the zones of overlap between adjacent detector arrays, and wherein said second image is acquired by a second detector array from the at least one set of detector arrays with a differential aberration with respect to said first image acquired by a first detector array from the at least one set of detector arrays.

2. A method according to claim 1, wherein the optical system comprises a plurality of sets of detector arrays ($40_1$, $40_2$,…, $40_N$), each set of detector arrays having an associated acquisition spectral band, the method being applied to the set of zones of overlap of the different spectral bands corresponding to a same given zone of the field of image capture, in order to determine the aberrations related to each of these zones of the field of image capture.

3. A method according to claim 1, applied over at least one zone of overlap of each spectral band, in a manner so as to characterize the optical aberrations by spectral band.

4. A method according to anyone of claims 1 to 3, wherein the said functional is further also dependent on a centroid wavelength associated with an acquisition spectral band, and wherein the centroid wavelength is estimated during the minimization of the said functional.

5. A method according to anyone of claims 1 to 4, wherein the said functional is further also dependent on a spatial shift between the first image and the second images acquired, the said spatial shift being estimated during the minimization of the said functional.

6. A method according to anyone of claims 1 to 5, wherein the calculation of at least one parameter characterizing at least one optical aberration implements a modelling of the said optical transfer function as a function of at least one coefficient of a decomposition in a Zernike polynomial basis of a wave front error associated with the optical system of the image acquisition device.

7. A method according to anyone of claims 1 to 6, in which the minimisation of the functional is performed by an iterative estimation method.

8. A method according to anyone of claims 1 to 7, comprising a modelling of each of the optical transfer functions associated with the image acquisitions by a polynomial of degree less than or equal to two, defined by the variables representative of the optical aberrations to be characterized and a minimization of the said functional by a non-iterative method.

9. A method according to anyone of claims 1 to 8, wherein a value of the differential aberration between the first and the second acquired image is estimated during the minimization of the said functional.

10. A method according to anyone of claims 1 to 9, wherein the said differential aberration between the first image and the second image is a relative defocusing between the first image and the second image.

11. A computer program comprising software instructions which, when operationally executed by a programmable device, implements an optical aberration characterization method for characterizing optical aberrations of an image acquisition device according to claims 1 to 10 by using a characterization device according to claim 12.

12. An optical aberration characterization device for characterizing at least one optical aberration of an optical system of an image acquisition device, the optical system having an associated optical transfer function that is dependent on the aberrations, the image acquisition device being capable of acquiring at least two images in a field of image capture in a manner so as to introduce a differential aberration between the two images, each image being defined by a digital image signal, the device comprising:

- an image obtaining module for obtaining a first image and a second image of a same given zone of the field of image capture, acquired by the image acquisition device, the second image being acquired with a differential aberration relative to the first image, each image acquisition having an associated optical transfer function;

- a processor that is capable of carrying out a calculation of at least one parameter characterizing at least one optical aberration by minimization of a functional expressed as a function of the first and second images acquired, using a convolutional model of image formation for the images acquired using an optical transfer function that is dependent on at least one optical aberration;

the said functional also being expressed as a function of a modelling of the optical transfer functions associated with the two image acquisitions dependent on the one or more optical aberrations to be characterized as well as on the differential aberration,

the optical system to be characterized being **characterized in that** it comprises at least one set of detector arrays ($40_1$, $40_{2,..}$, $40_N$) arranged in a staggered configuration, and in which said first and second images belong to the zones of overlap between adjacent detector arrays, and wherein said second image is acquired by a second detector array from the at least one set of detector arrays with a differential aberration with respect to said first image acquired by a first detector array from the at least one set of detector arrays.

FIG.1

FIG.2

ZR$_1$     ZR$_2$

40$_N$

40$_4$

40$_3$

40$_2$

40$_1$

## FIG.3

| Acquisition I$_1$, I$_2$ | 50 |

| Obtention Δaberr | 52 |

| Transformation TF | 56 |

| Calcul fonctionnelle Fonc/coefficients Zernike | 58 |

| Estimation coefficients minimisant Fonc | 60 |

## FIG.4

| Acquisition I₁, I₂ défocalisées | 62 |

$\downarrow$

| Obtention Δaberr | 64 |

$\downarrow$

| Transformation TF | 68 |

$\downarrow$

| Calcul FTM simplifiée | 70 |

$\downarrow$

| Estimation paramètres | 72 |

## FIG.5

100

112

| -102- |    | -110- |
| -104- |    | -108- |
| -106- |    |       |

## FIG.6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2004052426 A

- FR 2994488

**Littérature non-brevet citée dans la description**

- **PAXMANN ; FIENUP.** *Journal of the Optical Society of America A,* 1988, vol. 5 (6), 914-923